Europäisches Patentamt

European Patent Office

Office européen des brevets

(11) Publication number: **0 523 252 A1**

## EUROPEAN PATENT APPLICATION
### published in accordance with Art. 158(3) EPC

(21) Application number: 92904399.0

(22) Date of filing: 06.02.92

(86) International application number:
PCT/JP92/00120

(87) International publication number:
WO 92/14195 (20.08.92 92/22)

(51) Int. Cl.5: **G05B 13/02**

(30) Priority: **06.02.91 JP 36899/91**

(43) Date of publication of application:
**20.01.93 Bulletin 93/03**

(84) Designated Contracting States:
**DE IT SE**

(71) Applicant: **FANUC LTD.**
**3580, Shibokusa Aza-Komanba, Oshino-mura**
**Minamitsuru-gun, Yamanashi 401-05(JP)**

(72) Inventor: **TORII, Nobutoshi Fuyo Haitsu 308**
**65-4, Takakura-cho**
**Hachioji-shi Tokyo 192(JP)**
Inventor: **NIHEI, Ryo Fanuc Mansion Harimomi**
**7-210**
**3539-1, Shibokusa Oshino-mura**
**Minamitsuru-gun Yamanashi 401-05(JP)**
Inventor: **KATO, Tetsuaki Fanuc Mansion**
**Harimomi 8-101**
**3511-1, Shibokusa Oshino-mura**
**Minamitsuru-gun Yamanashi 401-05(JP)**

(74) Representative: **Otte, Peter, Dipl.-Ing.**
**Tiroler Strasse 15**
**W-7250 Leonberg(DE)**

(54) OSCILLATION DAMPER.

(57) Oscillation is suppressed by a state feedback in which a special filter is applied to the amount of twist and the speed of twist of a control object such as a robot that has a low-frequency oscillation system. The amount of twist $\epsilon$ and the speed of twist $\epsilon^{(1)}$ are estimated by an observer (36), and are fed through elements (38 and 39) to an adder (40) where they are added up together, and the added amount is fed back as a state feedback amount F and is subtracted from a speed instruction $\Theta d$. Therefore, a damping term of the transfer function can be independently changed by using a constant $K_1$ to suppress the oscillation. Furthermore, an inertia term is independently changed by using a constant $K_2$ to shorten the time for positioning.

# Fig.2

## TECHNICAL FIELD

The present invention relates to a damping control device for a controlled object having a vibration system of a low-frequency, such as a robot. In particular, it relates to such a device capable of reducing vibrations using an observer.

## BACKGROUND ART

A controlled object such as a robot having a vibration system of a low-frequency has a serious problem with respect to operation at its tip end (end effector) of an arm. For example, upon positioning the arm, a next step of an operation is not started until the vibration of the tip ceases, therefore this results in deterioration of a cycle time characteristic of the operation. In general, to prevent such vibrations a countermeasure has been taken to reduce a servo gain of the system for softly stopping the robot.

However, the reduction of the servo gain requires an extended positioning-time with a deterioration of the cycle time characteristic of the operation. The employment of a lower servo gain provides a decrease in the rigidity of the servomechanism, degrading the accuracy of a locus formation at the end effector of the robot arm, and deteriorating a machining accuracy of the robot used for arc welding, laser cutting and the like.

## DISCLOSURE OF THE INVENTION

The present invention has been made in view of the foregoing problem points. An object of the invention is to provide a damping control system for reducing vibrations by means of a state feedback produced by applying a special filter to a torsion quantity and a speed of torsion.

According to the invention, there is provided a damping control device for controlling a controlled object so that behavior of observed values of the controlled object becomes coincident with target behavior and vibration of the controlled object is damped, by feeding a control command according to the target behavior to the controlled object and by feeding back the observed values of the controlled object responsive to the control command, to the control command, comprising a torsion parameter decision means for determining parameters of torsion within the controlled object, and a torsion feedback means for feeding back the products obtained by multiplying the torsion parameters by transfer functions determined so as to damp vibration of the controlled object, to the control command.

## BRIEF DESCRIPTION OF THE DRAWINGS

Fig. 1 is a constitutional illustration of hardware of a robot system for embodying the present invention; and
Fig. 2 is a block diagram of a servomotor control according to the invention.

## BEST MODE FOR CARRYING OUT THE INVENTION

The invention will now be described for an embodiment with reference to the accompanying drawings as below.

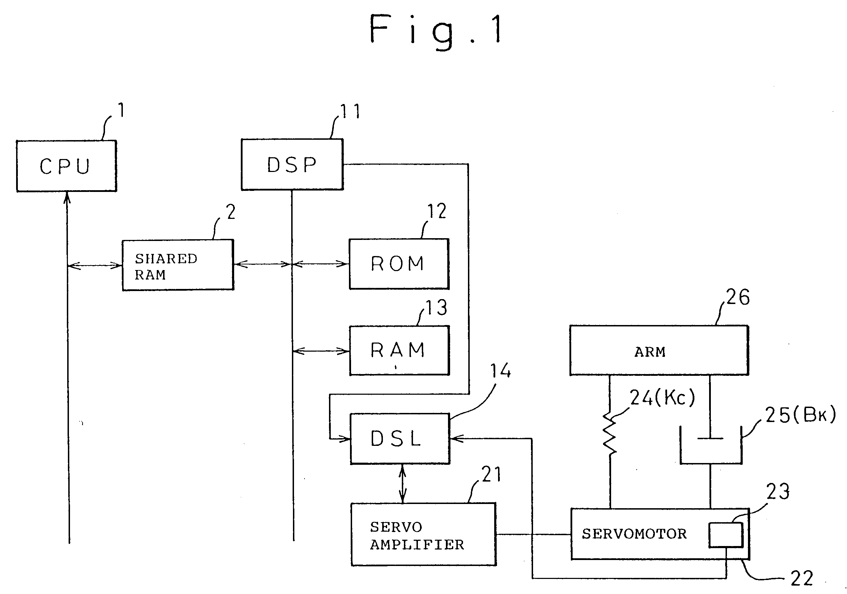

Fig. 1 is a constitutional illustration of hardware of a robot system for embodying the invention. A host processor 1 is a processor for controlling an entire robot. A position command $\theta_d$ for the robot is written into a shared RAM 2 from the host processor 1. Here, a ROM and a RAM each coupled to the host processor 1 are omitted.

A DSP 11 (digital signal processor), which controls a servomotor 22 incorporated in the robot, controls the servomotor 22 according to a system program stored in ROM 12. From this operation, the DSP 11 reads the position command $\theta_d$ of the shared RAM 2 at every constant time interval. The DSP 11 computes a speed command from the amount of error that is a difference between the position command $\theta_d$ and the position feedback from a pulse coder 23 incorporated in the servomotor 22. Further, the DSP 11 differentiates the position feedback to compute a speed feedback, and to compute a torque command from a difference between the speed feedback and the speed command. The resultant speed command and torque command are fed to a servo amplifier 21 through a digital servo LSI (DSL) 14, and the servo amplifier 21 is responsive to the torque command to drive the servomotor 22 which drives an arm 26 through a reduction gear. In the drawing there are typically illustrated a spring component 24 (spring constant $K_c$) and a damping component 25 (damping constant $B_k$) of the mechanical system like the reduction gear. The DSP 11 carries out a function of an observer 36 or the like which estimates the torsion quantity $\epsilon$ and the torsion speed $\epsilon^{(1)}$ from the torque command T and a speed $\theta^{(1)}$ of servomotor 22 respectively as described later. Symbol $X^{(n)}$ represents an n-th time-derivative of a parameter X throughout.

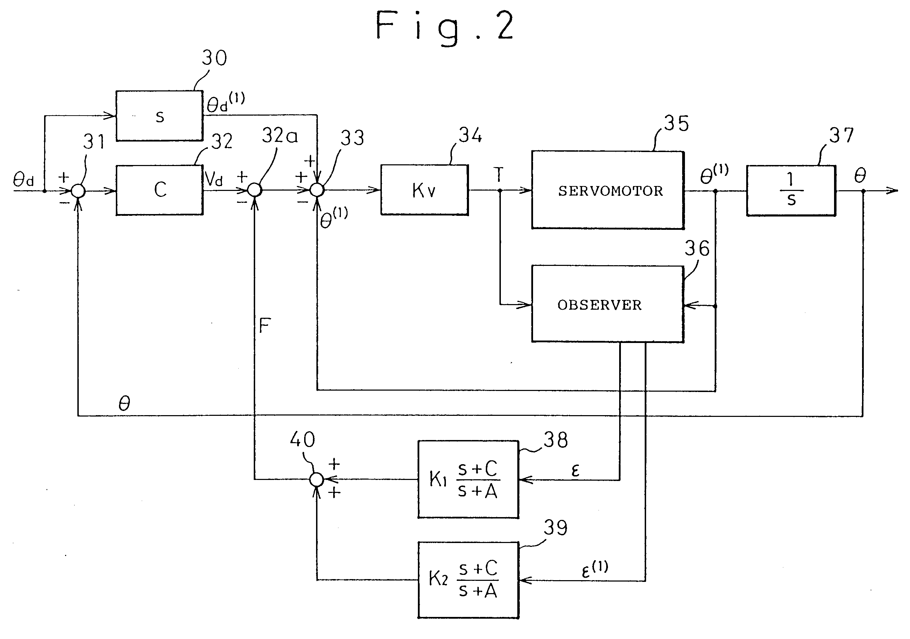

Fig. 2 is a block diagram of a servomotor control of a damping control system according to the invention. The positional instruction $\theta_d$ read from the shared RAM 2 is fed to an adder 31 to take a difference between the position command $\theta_d$ and the position feedback $\theta$ from the pulse coder 23, the difference being fed to an element 32. In the element 32, the input thus received is multiplied by a positional loop gain C and fed to an adder 32a as a speed command $V_d$. In the adder 32a, the speed command $V_d$ is subtracted by the amount of feedback F which will be described in detail later.

An output of the adder 32a is fed to an adder 33 which produces a difference between the speed command $V_d$ for the servomotor 22 and the feedback speed $\theta^{(1)}$ from the servomotor 22, the difference being fed to an element 34. Further in the adder 33, an output $\theta_d^{(1)}$ obtained by differentiating the position command $\theta_d$ in a differential element 30 is added. The differential element 30 constitutes a feed forward loop. In the element 34, a speed control loop gain $K_v$ is multiplied to form a torque command T which is fed to an element 35. A band of the speed control loop is made larger by one or more digits than that of a positional loop. The element 35 is an element corresponding to the servomotor 22, the output of which is a speed $\theta^{(1)}$ of the servomotor 22, and the speed of which is integrated for (1/s) by an integration element 37 to output a position $\theta$ of the servomotor 22, where "s" represents the Laplace variable.

The observer 36 is an identity observer. The observer 36 is responsive to each of the torque command T and the speed $\theta^{(1)}$ of servomotor 35, and estimates both of the amount of torsion $\epsilon$ which is a position deviation between a position $\theta$ of the servomotor 35 and a position $\theta_t$ of the arm 26 and the amount of torsion speed $\epsilon^{(1)}$ which is a velocity deviation between a speed $\theta^{(1)}$ of the servomotor 35 and a speed $\theta_t^{(1)}$ of the arm.

The amount of torsion $\epsilon$ is fed to an element 38 to be multiplied by a coefficient $[K_1(s + C)/(s + A)]$. The torsion speed $\epsilon^{(1)}$ is fed to an element 39 to be multiplied by a coefficient $[K_2(s + C)/(s + A)]$. Outputs of the elements 38 and 39 are added each other at an adder 40, and the resultant sum is subtracted from the speed command $V_d$ as a feedback value F.

Next, upon consideration of a transfer function in Fig. 2, the equation (1) is obtained (where a transfer characteristic of the speed control loop is assumed to be "1" since a responsibility of the speed control loop is considerably higher compared to that of the positional loop).

$$(\theta_d - \theta)^*C + \theta_d^{(1)} - K_1{}^*Q^*\epsilon - K_2{}^*Q^*\epsilon^{(1)} = \theta^{(1)} \qquad (1)$$

where,

$$Q = (s + A)/(s + C)$$
$$\epsilon = \theta - \theta_t$$
$$\epsilon^{(1)} = \theta^{(1)} - \theta_t^{(1)}$$

An operation of the robot shown in Fig. 1 will be described with respect to a vibration model consisting of a spring and a damper. The transmission gear of the robot can be substantially represented by using such model.

Various coefficients are employed, in which,

$J_t$     Inertia of Arm
$\theta_t$     Tip End Position of Arm
$B_k$     Damping Constant of Speed Reduction Gear System
$K_c$     Spring Constant of Speed Reduction Gear System
$J$     Inertia on and after Speed Reduction Gear
$\theta$     Position of Servomotor

In consideration of a transfer function from the position $\theta$ of the servomotor 22 to the tip end position $\theta_t$ of the arm 26, the equation (2) is obtained as follows,

$$(\theta_t/\theta) = (B_k{}^*s + K_c)/(J_t{}^*s^2 + B_k{}^*s + K_c) \qquad (2)$$

The equation (2) is solved for $\theta$ which is substituted into the equation (1), and the equation (3) is then produced as below,

$$(\theta_t/\theta_d) = (B_k{}^*s + K_c)/R_1$$

$R_1 = [(J_t{}^*K_2)/(S + A)]s^3 + [(J_t{}^*K_1)/(s + A)]{}^*s_2 + J_t{}^*s^2 + B_k{}^*S + K_c$     (3)

In the equation (3), if A is selected to the smaller value at the extent where (s + A) is considered as S around the vibration frequency, that is, A is a smaller value than a natural vibration frequency of the arm, then the equation (3) goes to the equation (4).

$(\theta_t/\theta_d) = (B_k{}^*s + K_c)/R_2$
$R_2 = [J_t + J_t{}^*K_2]{}^*s_2 + (B_k + J_t{}^*K_1){}^*s + K_c$     (4)

As is apparent from the equation (4), a variation of $K_1$ can independently produce a variation of the damping term to suppress the vibration. That is, a larger $K_1$ makes a larger damping term and prevents the vibration. A variation of $K_2$ can change a moment of inertia to vary a vibration frequency. That is, by making $K_2$ a minus value the vibration frequency is raised to provide a more rapid positioning.

An estimation process includes an integration of a state variable. If the state variable had some offset value because of a discrepancy between parameters and values of the controlled object, the offset value would be accumulated through the integration. To avoid the accumulation of the offset value, the term s + A is not replaced by s from the first step.

In this way, by performing a feedback shown in elements 38 and 39 in Fig. 2 it is possible to suppress vibration and to shorten a positioning time. Further, an accuracy of locus can be improved without decreasing a servo-loop gain.

Finally, the invention will be described for an operation for realizing the observer 36 which can estimate the amount of torsion $\epsilon$ and $\epsilon^{(1)}$ from the torque instruction T and the speed $\theta^{(1)}$ of the servomotor 35.

As shown in Fig. 1, the robot is represented by a model formed using the spring 24 of a spring constant $K_c$ and the damper 25 of a damping constant $B_k$. Constants at the motor side are expressed as follow,

$J_m$     Rotor Inertia

$A_m$     Viscosity coefficient

and, the equation of motion is established paying attention to the motor side, as follows,

$T = J_m{}^*\theta^{(2)} + B_k{}^*(\theta^{(1)} - \theta_t{}^{(1)}) + K_c{}^*(\theta - \theta_t) + A^{m*}\theta^{(1)}$     (5)

In looking at the load side the following equation of motion is obtained,

$0 = J_t{}^*\theta_t{}^{(2)} + B_k{}^*(\theta_t{}^{(1)} - \theta^{(1)}) + K_c{}^*(\theta_t - \theta)$     (6)

Here, $\epsilon$ is substituted as,

$\epsilon = \theta - \theta_t$     (7)

and, with respect to both sides each of the equations (5) and (6), $(5)/J_m - (6)/J_t$ is calculated, the following equations being obtained,

$$\frac{T}{J_m} = \epsilon^{(2)} + \left( \frac{B_k}{J_m} + \frac{B_k}{J_t} \right)\epsilon^{(1)} + \left( \frac{K_c}{J_m} + \frac{K_c}{J_t} \right)\epsilon$$

$$+ \frac{A_m}{J_m}\theta^{(1)}$$

$$\epsilon^{(2)} = -\left( \frac{B_k}{J_m} + \frac{B_k}{J_t} \right)\epsilon^{(1)} - \left( \frac{K_c}{J_m} + \frac{K_c}{J_t} \right)\epsilon$$

$$- \frac{A_m}{J_m}\theta^{(1)} + \frac{T}{J_m} \qquad \cdots \quad (8)$$

Solving the equation (5) for $\theta^{(2)}$ and substituting the equation (7), the equation is established as below,

$$\theta^{(2)} = - \frac{B_k}{J_m} \epsilon^{(1)} - \frac{K_c}{J_m} \epsilon - \frac{A_m}{J_m} \theta^{(1)}$$

$$+ \frac{T}{J_m} \qquad\qquad (9)$$

The state variables $X_1$, $X_2$, and $X_3$ are selected as,

$X_1 = \epsilon^{(1)}$
$X_2 = \epsilon$
$X_3 = \theta^{(1)}$

Then, the state equation is expressed from the equations (8) and (9) as follows,

$$
\begin{bmatrix} X_1 \\ X_2 \\ X_3 \end{bmatrix}^{(1)}
=
\begin{bmatrix}
-\left(\frac{B_k}{J_m}+\frac{B_k}{J_t}\right), & -\left(\frac{K_c}{J_m}+\frac{K_c}{J_t}\right), \\
1, & 0, \\
-\frac{B_k}{J_m}, & -\frac{K_c}{J_m},
\end{bmatrix}
$$

$$
\begin{bmatrix}
-\frac{A_m}{J_m} \\
0 \\
-\frac{A_m}{J_m}
\end{bmatrix}
\begin{bmatrix} X_1 \\ X_2 \\ X_3 \end{bmatrix}
+
\begin{bmatrix} \frac{1}{J_m} \\ 0 \\ \frac{1}{J_m} \end{bmatrix} {}^*T
$$

Since $X_3$ is a state variable which can be observed, an observation equation is established as follows,

$Y = [001] [X_1\ X_2\ X_3]^t$

Those equations are converted in accordance with a Z-transformation and expressed as,

$X(n + 1) = Az^*X(n) + Bz^*T$
$Y = C^*X(n)$

where,

$$X(n) = \begin{bmatrix} X1(n) \\ X2(n) \\ X3(n) \end{bmatrix}$$

An estimate of $X(n)$ is represented as $\tilde{X}(n)$ and an identity obserber is constructed. The estimate $\tilde{X}(n)$ is calculated from the following equation,

$$\tilde{X}(n + 1) = (Az - K \cdot C) * X(n) + Bz * T + K \cdot Y$$

where K is selected so that (Az - K$\cdot$C) becomes stable.

In the foregoing explanation, the controlled object has been selected to be a robot. The invention can also be applied in the same manner to controlled objects each having a vibration system of a low-frequency other than robots.

The observer has been used for obtaining an amount of torsions and a torsion speed, notwithstanding, those values can be produced by comparing with an output of a pulse coder in an arrangement of the positional and speed detectors provided directly at the tip end of the mechanical section. In such a case, although the detectors are used as required, accurate values of the torsion quantity etc. are obtained.

As hereinbefore fully described, according to the invention, a state feedback is provided for independently controlling the damping term and the inertia term each of the control system including the mechanical section, accordingly vibrations can be prevented without decreasing a gain of the servo system. This reduces a positioning speed and improves an accuracy of the locus.

## Claims

1. A damping control device for controlling a controlled object so that behavior of observed values of the controlled object becomes coincident with target behavior and vibration of the controlled object is damped, by feeding a control command according to the target behavior to the controlled object and by feeding back the observed values of the controlled object responsive to the control command, to the control command, comprising:

   a torsion parameter decision means for determining parameters of torsion within the controlled object; and

   a torsion feedback means for feeding back the products obtained by multiplying the torsion parameters by transfer functions determined so as to damp vibration of the controlled object, to the control command.

2. A damping control device as claimed in claim 1, wherein

   the target behavior includes a target position and a target speed of a controlled object, and

   the observed values of the controlled object include an observed position and an observed speed of the controlled object, further comprising;

   a position feedback means for feeding back the product obtained by multiplying a deviation between the observed position and the target position of the controlled object by a predetermined positional loop gain, to the control command, and

   a speed feedback means for feeding back the product obtained by multiplying a deviation between the observed speed and the target speed of the controlled object by a predetermined speed loop gain, to the control command.

3. A damping control device as claimed in claim 2, wherein the torsion parameters include an amount of torsion $\epsilon$ and of torsion speed $\epsilon^{(1)}$ that is time-derivative of the torsion $\epsilon$ and the torsion feedback means feeds back the value calculated from the following equation to the control command,

   $$-[K_1 * \{(s + C)/s + A\} \epsilon + K_2 * \{(s + C)/s + A\} \epsilon^{(1)}]$$

   where C represents the positional loop gain of the position feedback means, "s" a Laplace variable, and A, $K_1$, and $K_2$ each a constant determined so as to damp vibration of the controlled object.

4. A damping control device as claimed in claim 3, wherein the torsion parameter decision means is an observer estimating the torsion quantity $\epsilon$ and the torsion speed $\epsilon^{(1)}$ from the control command issued to the controlled object and an observed value of the controlled object.

5. A damping control device as claimed in claim 3, wherein the torsion parameter decision means includes a torsion detecting means for detecting the torsion quantity $\epsilon$ and the torsion speed $\epsilon^{(1)}$ each in the controlled object.

6.  A damping control device as claimed in claim 3, wherein the constant A is smaller than a natural frequency of the controlled object.

7.  A damping control device as claimed in claim 3, wherein the controlled object has an arm activated by a servomotor, and the torsion quantity $\epsilon$ and the torsion speed $\epsilon^{(1)}$ are a deviation between a position of the servomotor and a tip end position of the arm and its time-derivative, respectively.

Fig.1

CPU — 1

SHARED RAM — 2

DSP — 11

ROM — 12

RAM — 13

DSL — 14

SERVO AMPLIFIER — 21

SERVOMOTOR

22

23

24(Kc)

25(Bк)

26

ARM

9

# Fig.2

EP 0 523 252 A1

# INTERNATIONAL SEARCH REPORT

International Application No  PCT/JP92/00120

**I. CLASSIFICATION OF SUBJECT MATTER** (if several classification symbols apply, indicate all) ⁶

According to International Patent Classification (IPC) or to both National Classification and IPC

Int. Cl⁵  G05B13/02

**II. FIELDS SEARCHED**

| Minimum Documentation Searched ⁷ | |
|---|---|
| Classification System | Classification Symbols |
| IPC | G05B13/02, G05D19/02 |

Documentation Searched other than Minimum Documentation
to the Extent that such Documents are included in the Fields Searched ⁸

Jitsuyo Shinan Koho          1932 - 1992
Kokai Jitsuyo Shinan Koho    1971 - 1992

**III. DOCUMENTS CONSIDERED TO BE RELEVANT ⁹**

| Category * | Citation of Document, ¹¹ with indication, where appropriate, of the relevant passages ¹² | Relevant to Claim No. ¹³ |
|---|---|---|
| Y | JP, A, 59-66705 (Vickers Inc.), April 16, 1984 (16. 04. 84), & US, A, 4502109 | 1-7 |
| Y | JP, A, 63-68903 (Fujitsu Ltd.), March 28, 1988 (28. 03. 88), (Family: none) | 1-7 |
| Y | JP, B2, 63-37329 (Toshiba Corp.), July 25, 1988 (25. 07. 88), (Family: none) | 1-7 |
| Y | JP, A, 1-296301 (Fanuc Ltd.), November 29, 1989 (29. 11. 89), (Family: none) | 1-7 |
| Y | JP, A, 1-157283 (Siemens AG.), June 20, 1989 (20. 06. 89), (Family: none) | 1-7 |

\* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 1, 1992 (01. 05. 92) | May 26, 1992 (26. 05. 92) |

| International Searching Authority | Signature of Authorized Officer |
|---|---|
| Japanese Patent Office | |

Form PCT/ISA/210 (second sheet) (January 1985)